# EUROPEAN PATENT APPLICATION

(11) **EP 3 051 268 A1**
(43) Date of publication of application: **03.08.2016**
(21) Application number: 14849696.1
(22) Date of filing: 24.09.2014
(51) Int. Cl.: G01M 15/10, G01M 17/007

(54) **DRIVING MODE DISPLAY DEVICE, DRIVING MODE DISPLAY PROGRAM, AND VEHICLE TEST SYSTEM**

(30) Priority: 24.09.2013 JP 2013196447
(71) Applicant: Horiba, Ltd., Kyoto-shi, Kyoto 601-8510 (JP)
(72) Inventor: SASAKI, Tetsuo, Kyoto-shi Kyoto 601-8510 (JP); OKADA, Jungo, Kyoto-shi Kyoto 601-8510 (JP); MIZUTANI, Yukihiro, Kyoto-shi Kyoto 601-8510 (JP)
(74) Representative: Müller Hoffmann & Partner
(86) International application number: PCT/JP2014/075189
(87) International publication number: WO 2015/046201

(57) **Abstract**

A driving mode display device of this invention makes it possible to more smoothly and efficiently conduct a vehicle exhaust gas measurement test using a chassis dynamometer and also makes it possible to further improve the security. The driving mode display device comprises an operational state display part 8 that displays an operational state of equipment that is necessary for an exhaust gas measurement test to a test driver and an input receive part 9 that receives an input that is for the test driver to control an operation of the equipment.

## Description

### FIELD OF THE ART

This invention relates to a vehicle driving mode display device that is used at a time when a mode driving test is conducted on a vehicle such as an automobile placed on a chassis dynamometer.

### BACKGROUND ART

As shown in a patent document 1, for an exhaust gas measurement test that is conducted by running a vehicle in a chamber mainly used are four devices such as a chassis dynamometer on which a vehicle is loaded, a driving mode display device that displays at least a running speed pattern that is previously determined by a driving mode and an actual vehicle speed and that assists a test driver to run the vehicle in accordance with the running speed pattern, an exhaust gas analyze device that samples the exhaust gas discharged from the exhaust gas measurement test and that analyses a component of the exhaust gas or measures a fuel consumption amount and a measurement administration device that controls and operates each of the above-mentioned devices integrally.

Concretely, the measurement administration device operates an exhaust gas blower or a fan for cooling the vehicle, or a start signal is sent to the measurement administration device by operating a remote control switch by the test driver who boards on the vehicle.

With this procedure, the measurement administration device transmits an operation initiation signal to the vehicle driving mode display device and initiates the exhaust gas measurement test. More specifically, the measurement administration device collects various data in accordance with a component of the exhaust gas, a fuel consumption amount, a vehicle speed, an engine rotational number, a temperature of each part, an operational state of each device and initiates analysis of these data through the exhaust gas analyze device, the vehicle and the chassis dynamometer or the like.

A conventional driving mode display device is just for displaying, so called, running s information necessary for the test driver to run the vehicle; by receiving a dynamo roller speed (a vehicle speed), an engine rotational number, a WOT (a throttle opening degree), a boost pressure, an atmospheric pressure, a dry-bulb temperature and a wet-bulb temperature as an input, processing the received data by means of an inner computer and displaying an actual vehicle speed marker on a target speed pattern or displaying the WOT, the boost pressure and the engine rotational number numerically or in a graph form on a display.

However, since this kind of the driving mode display device is operated independently by a computer different from the measurement administration device and the data is administrated separately from the measurement administration device, it becomes complicated to administrate the common data such as registered information like the driving (running) mode, the vehicle information or setting of a transmission timing for every vehicle.

In addition, since it is not possible for the driving mode display device to grasp a state of other equipment, the test driver cannot recognize possible risk information due to any trouble or setting error of the exhaust gas measurement device or its peripheral devices after the test driver boards the vehicle. As a result of this, if the operator of the measurement administration device fails to notice a failure state of the equipment, it becomes necessary to conduct the exhaust gas measurement test again or other equipment or the vehicle might get damaged if the equipment is, for example, the blower for sucking the exhaust gas or the fan for cooling the vehicle. Since it is not possible for the driving mode display device to control the other equipment, for example, in order to restore certain equipment whose switch is forgotten to turn on, the operator of the measurement administration device becomes necessary.

### PRIORART DOCUMENT

### Patent document

Patent document 1: Japanese Unexamined Patent Application Publication No. 11-37902

### DISCLOSURE OF THE INVENTION

### PROBLEMS TO BE SOLVED BY THE INVENTION

The present claimed invention intends to solve all of the problems and a main object of this invention is to provide a driving mode display device that makes it possible to more smoothly and efficiently conduct a vehicle exhaust gas measurement test using a chassis dynamometer and also makes it possible to further improve the reliability and the security of the vehicle exhaust gas measurement test.

### MEANS TO SOLVE THE PROBLEMS

More specifically, a driving mode display device is accordance with the present claimed invention is used for an exhaust gas measurement test of a vehicle on a chassis dynamometer and displays a running speed pattern determined by a driving mode to a test driver of the vehicle, and is characterized by comprising an operational state display part that displays an operational state of equipment (hereinafter also called as important equipment) that can have an influence on the exhaust gas measurement test to the test driver in case that the operational state of the equipment is halted or in an insufficient state, and an input receive part that receives an input for the test driver to control the operation of the important equipment.

In accordance with this arrangement, the test driver can recognize the information concerning a risk due to a trouble or a setting error of the exhaust gas measurement device or the important equipment including peripheral devices of the exhaust gas measurement device on a real time basis even after the test driver boards the vehicle so that it is possible to avoid danger without wasting the test. Furthermore, since the test driver can control the operational state of the important equipment, it is possible to conduct the exhaust gas measurement test extremely efficiently and smoothly compared with a conventional driving mode display device that is always controlled by an operator of the measurement administration device that administrates the equipment used for the exhaust gas measurement device.

In addition, since the operational state of the equipment can be monitored together with the operator of the measurement administration device, it becomes possible to remarkably improve the reliability and the security of the exhaust gas measurement test.

The important equipment described here is, for example, a blower for sucking the exhaust gas and a fan for cooling the vehicle. If the blower for sucking the exhaust gas is not in operation, an event might be caused that an undiluted exhaust gas reaches a filter that is used by the PM measurement and the filter is burned, and an event might also be caused that the exhaust gas of the vehicle fills the chamber. If the vehicle runs in a state that the fan for cooling the vehicle is OFF, the vehicle might overheat.

In order to unify the administration of the data and to simplify the administration of the common data such as registered information, it is preferable that the driving mode display device is communicably connected to a measurement administration device that administrates the equipment used for the exhaust gas measurement test, and the input receive part also serves as an input receive part of the measurement administration device.

Meanwhile, in case of selecting the driving mode prior to the test, in accordance with a conventional driving mode display device wherein only a name of the driving mode is displayed, the test driver tends to make a mistake. As a result of this, there is a problem that it is necessary to conduct the exhaust gas measurement test again. However, if a prior to selection driving mode pattern display part that displays a pattern shape of each driving mode is further provided before the driving mode is selected through the input receive part, the above-mentioned problem can be solved.

### EFFECT OF THE INVENTION

In accordance with the present claimed invention having the above arrangement, since the test driver can control the operational state of the important equipment, it is possible to conduct the exhaust gas measurement test extremely efficiently and smoothly. In addition, since the operational state of the equipment can be monitored together with the operator of the measurement administration device, it becomes possible to remarkably improve the reliability and the security of the exhaust gas measurement test.

### BRIEF DESCRIPTION OF THE DRAWINGS

Fig. 1 is an overall view schematically showing a configuration of a vehicle test system in accordance with this embodiment.
Fig. 2 is a function block view of an operation mode display device in accordance with this embodiment.
Fig. 3 is a screen view showing an operational state display screen in this embodiment.
Fig. 4 is a screen view showing a prior to test condition setting screen in this embodiment.

### EXPLANATION OF CODES

- 1: chassis dynamometer
- 2: driving mode display device
- 3: exhaust gas analysis device
- 4: measurement administration device
- 6: fan
- 51: blower
- 8: operational state display part
- 9: input receive part
- 10: prior to selection driving mode pattern display part
- V: vehicle

### BEST MODES OF EMBODYING THE INVENTION

One embodiment of a driving mode display device in accordance with this invention will be explained with reference to drawings.

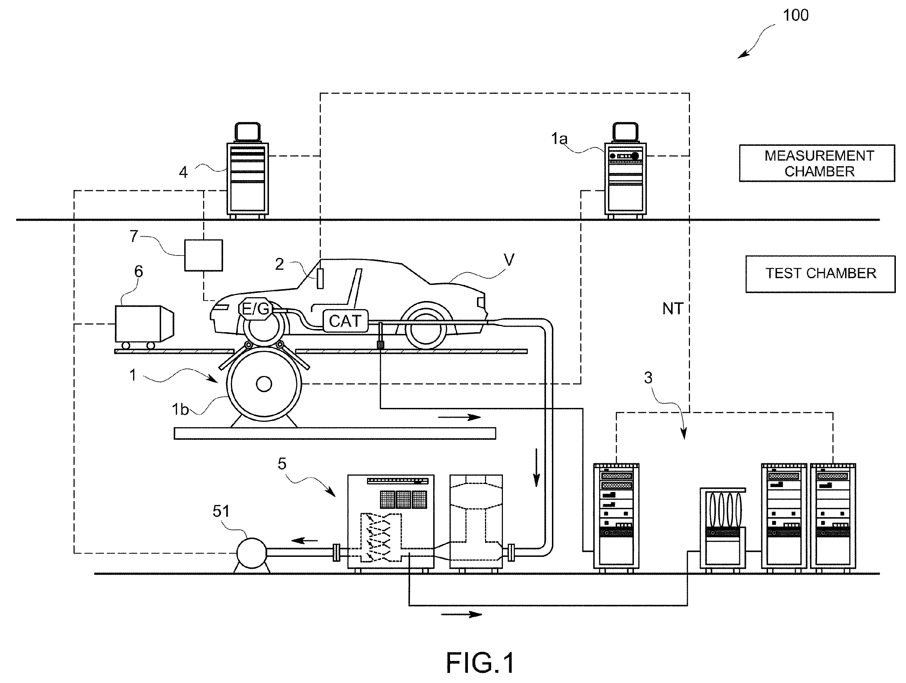

A vehicle test system 100 in accordance with this embodiment is to conduct a measurement test of an exhaust gas emitted at a time when an automobile runs in a chamber called as a cell, and as its overall configuration is shown in Fig. 1, the vehicle test system 100 comprises a chassis dynamometer 1, an exhaust gas measurement device 3, a measurement administration device 4 and a driving mode display device 2, each of which is arranged separately in a measurement chamber and a test chamber each of which is air-tightly sealed.

The chassis dynamometer 1 is, for example, of uniaxial, and comprises a dynamo body 1b having a rotating drum on which a driving wheel of a vehicle (V) is placed and a dynamo control device (1a) that gives the vehicle (V) a running load similar to that on the road by controlling the dynamo body (1b). The dynamo control device (1a) is so configured by making use of a computer system comprising, for example, a CPU and a memory or the like, and has a function that enables a control signal or data to be communicated interactively between the dynamo control device (1a) and outside. Fig. 1 shows the vehicle test system 100 that is dedicated to a 2-wheel drive (2WD) vehicle and a front-engine front-drive (FF) vehicle, however, it is a matter of course that it may comprise a pair of the dynamo bodies (1b) in the front and the behind, or it may be of dual axis.

The exhaust gas measurement device 3 is loaded with multiple gas analyzers each of which has a different measurement principle and can measure each component such as HC, NOₓ, CO and CO₂ contained in an exhaust gas of an engine respectively and continuously. In this embodiment, the vehicle test system 100 is so configured that can also conduct a weight measurement of CO, HC and NO per a unit running distance by being combined with an exhaust gas constant volume sample sampling device 5 that samples the exhaust gas that is diluted by an atmospheric gas as a sample gas. The exhaust gas measurement device 3 comprises a computer system by making use of a CPU and a memory or the like, and has a function that enables a control signal or data to be communicated interactively between the exhaust gas measurement device 3 and outside.

The measurement administration device 4 is a computer system comprising a body part made of, for example, a CPU, a memory and a communication port, and a console made of a display and an input device or the like. The measurement administration device 4 can send or receive data between the dynamo control device (1a) and the exhaust gas measurement device 3 through a net work (NT) such as a local area network (LAN), and can generally control the dynamo control device (1a), the exhaust gas measurement device 3 or other equipment (a vehicle cooling fan 6, a vehicle information obtaining device 7 and a room air conditioner or the like) or obtain the data.

More concretely, each of equipment (the equipment is a concept that includes a device or an element that constitutes the device) is registered to a body part of the measurement administration device 4, and an operational state or a measurement result of the registered equipment, or alarm information is displayed on the display by numerals, texts or graphics, and the operational state of each equipment can be controlled by the input device. To control the chassis dynamometer 1 is to initiate/halt of the operation, or to set or change a load. To control the exhaust gas measurement device 3 is to conduct an initial setting of each gas analyzers, to initiate / halt of the measurement, to change or correct a measurement condition or to conduct ON / OFF of a blower.

The driving mode display device 2 comprises a display and an input device (for example, a touch panel integrally attached to the display), and is placed on, for example, an inside surface of a front window or a dashboard of the vehicle so as to make it possible to be visible and operated by a test driver.

In this embodiment, the chassis dynamometer 1, the exhaust gas measurement device 3 and the driving mode display device 2 are placed in the test chamber, and the dynamo control device (1a) and the measurement administration device 4 are placed in the measurement chamber that is airtightly divided from the test chamber, however, the arrangement of each device is not limited to this.

The driving mode display device 2 in accordance with this embodiment is communicably connected to the measurement administration device 4 by wire or wirelessly (LAN, USB or the like), and produces a function as a second console (2b) of the measurement administration device 4.

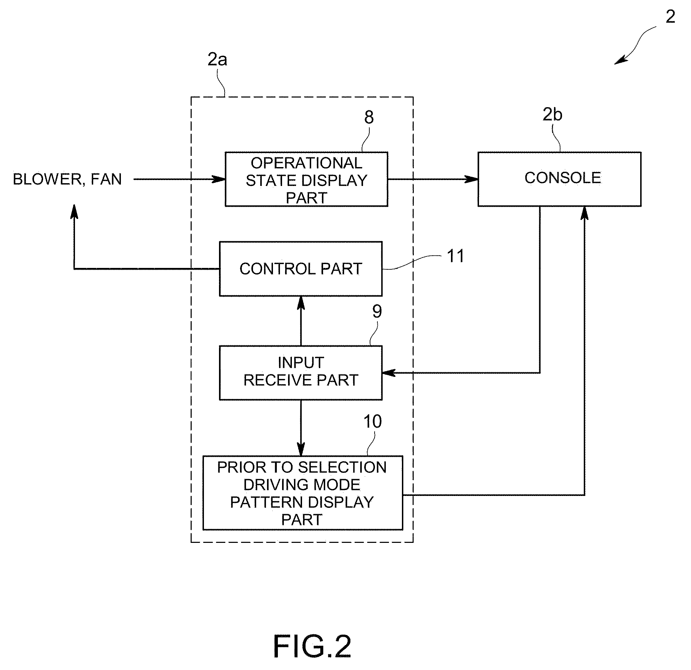

Meanwhile, the body part of the measurement administration device 4 also serves as the body part (2a) that substantially produces an information processing function or a control function of the driving mode display device 2. The driving mode display device 2 produces functions as the operational state display part 8, the input receive part 9, a prior to selection driving mode pattern display part 10 and the control part 11 as shown in Fig. 2 by means of programs installed into the body part (2a).

The operational state display part 8 displays an operational state of the equipment necessary for the exhaust gas measurement test to the test driver. The equipment necessary for the exhaust gas measurement test in this embodiment is equipment that requires to conduct the exhaust gas measurement test again or equipment that might cause a failure with the vehicle or other devices in case that the operational state of the equipment is insufficient or halted. At least a blower 51 for sucking an exhaust gas and a fan 6 for cooling the vehicle are included as the equipment necessary for the exhaust gas measurement test in this embodiment.

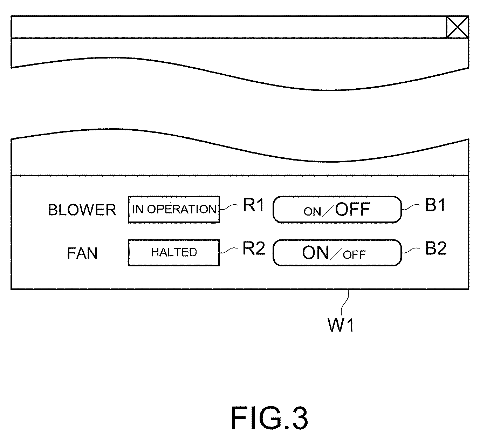

As shown in Fig. 3, a screen (W1) having operational state display columns (R1), and (R2) that display whether the blower 51 and the fan 6 operate or not is arranged on the display The screen (W1) can be displayed in either case of prior to a running test (prior to the exhaust gas measurement test) and of during the running test (during the exhaust gas measurement test).

Equipment control buttons (ON / OFF buttons in this embodiment) (B1) and (B2) for commanding the blower 51 and the fan 6 to initiate / halt are also displayed on the screen (W1).

The input receive part 9 receives an input to the equipment control buttons (B1) and (B2) from the test driver, and transmits the input to the control part 11 for controlling the blower 51 and the fan 6. When the control part 11 receives the input, the control part 11 controls the blower 51 and the fan 6 to be in the initiation state and the halted state.

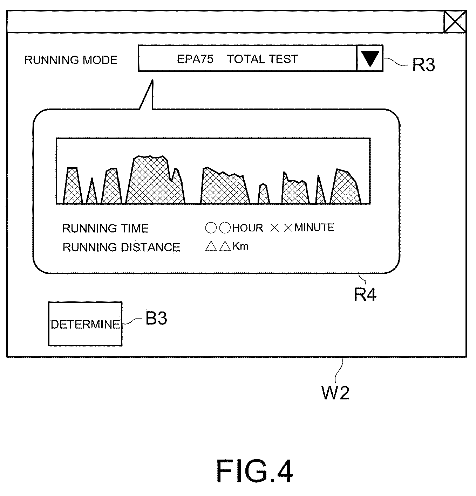

In addition, the input receive part 9 can receive selection of the driving mode that is conducted prior to the exhaust gas measurement test. The driving mode is set on a prior to test condition setting screen (W2), and there is a driving mode name column (R3) that indicates a name of the driving mode on the prior to test condition setting screen (W2) as shown in Fig. 4. The driving mode name column (R3) displays the mode name by switching each driving mode that has been registered in advance, or by displaying the mode name collectively in a list form. When the test driver touches and operates a determining button (B3) arranged on the screen (W2) separately from the driving mode name column (R3), the driving mode (a highlighted driving mode in case of the list form) displayed in the driving mode name column (R3) is received and determined as the driving mode used for the exhaust gas measurement test.

The prior to selection driving mode pattern display part 10 displays detailed information about the driving mode (in case of the list form, the highlighted driving mode), namely a pattern shape, a running time and a running distance in the driving mode, displayed in the driving mode name column (R3) received by the input receive part 9 on a detailed information column (R4) arranged on the prior to test condition setting screen (W2). The detailed information is also displayed before the driving mode is determined and a content of the detailed information is changed every time when the driving mode is changed.

It is a matter of course that the driving mode display device 2 is also provided with former functions. The former functions are to display an actual vehicle speed marker on a target speed pattern and to display a WOT, a boost pressure and an engine rotational number numerically or in a graph form.

In accordance with the driving mode display device 2 having this arrangement, since the test driver can control the operational state of the equipment, it is possible to extremely efficiently and smoothly conduct the exhaust gas measurement test. In addition, since the operational state of the equipment can be monitored also by the operator of the measurement administration device 4, it becomes possible to remarkably improve the reliability or security of the exhaust gas measurement test.

This invention is not limited to the above-mentioned embodiment.

For example, the driving mode display device may display that alarm is issued in other equipment such as the blower or the fan. With this arrangement, it is possible to furthermore improve the security.

In addition, the driving mode display device may control the exhaust gas measurement device in addition to displaying the operational state of the exhaust gas measurement device whether a measurement of a line necessary for the test is operating or not. In accordance with this arrangement, it is possible to more securely prevent the exhaust gas measurement test from conducing again due to leakage of the measurement.

Furthermore, the driving mode display device may perform not only a function of a part of the console of the measurement administration device but also all functions.

The driving mode display device may be provided with a local CPU in charge of communication or displaying the screen, or may be provided with a body part that is operated in synchronization with the body part of the measurement administration device in addition to the measurement administration device.

The vehicle test system may not be provided with the measurement administration device. In this case, the driving mode display device displays and controls the state of each equipment.

In addition, it is a matter of course that the present claimed invention is not limited to the above-mentioned embodiment and may be variously modified without departing from a spirit of the invention.

## Claims

1. A driving mode display device that is used for an exhaust gas measurement test of a vehicle on a chassis dynamometer and that displays a running speed pattern determined by a driving mode to a test driver of the vehicle, wherein
comprising an operational state display part that displays an operational state of equipment that can have an influence on the exhaust gas measurement test to the test driver, in case that the operational state of the equipment is halted or in an insufficient state and an input receive part that receives an input for the test driver to control the operation of the equipment.

2. The driving mode display device described in claim 1, wherein
the equipment is a blower for sucking an exhaust gas of the vehicle and an outside fan for cooling the vehicle.

3. The driving mode display device described in claim 1, wherein
the driving mode display device is communicably connected to a measurement administration device that administrates the equipment used for the exhaust gas measurement test, and the input receive part also serves as an input receive part of the measurement administration device.

4. The driving mode display device described in claim 1, wherein
the input receive part can receive selection of the driving mode for the test, and further comprising
a prior to selection driving mode pattern display part that displays a pattern shape of each driving mode prior to selection of the driving mode through the input receive part.

5. A driving mode display program that is used for an exhaust gas measurement test of a vehicle on a chassis dynamometer and that is loaded on a driving mode display device that displays a driving mode to a test driver of the vehicle, wherein producing
a function as an operational state display part that displays an operational state of equipment necessary for the exhaust gas measurement test to the test driver and
a function as an input receive part that receives an input for the test driver to control the operation of the equipment.

6. A vehicle test system that comprises a chassis dynamometer on which a vehicle is loaded, a driving mode display device that displays at least a running speed pattern that is previously determined by a driving mode and an actual vehicle speed and that assists a test driver to run the vehicle in accordance with the running speed pattern, an exhaust gas analyze device that analyses an exhaust gas discharged from the vehicle and a measurement administration device that administrates each of the above-mentioned devices, wherein
the driving mode display device comprises an operational state display part that displays an operational state of equipment that can have an influence on the exhaust gas measurement test to the test driver in case that the operational state of the equipment is halted or in an insufficient state and an input receive part that receives an input for the test driver to control an operation of the equipment.
